(19) Europäisches Patentamt
European Patent Office
Office européen des brevets

(11) **EP 4 660 220 A1**

(12) **EUROPEAN PATENT APPLICATION**
published in accordance with Art. 153(4) EPC

(43) Date of publication:
**10.12.2025 Bulletin 2025/50**

(21) Application number: **23919893.0**

(22) Date of filing: **17.11.2023**

(51) International Patent Classification (IPC):
**C08J 5/04** (2006.01)

(52) Cooperative Patent Classification (CPC):
**C08J 5/04**

(86) International application number:
**PCT/JP2023/041424**

(87) International publication number:
**WO 2024/161758 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.01.2023 JP 2023012422**

(71) Applicant: **Toray Industries, Inc.
Tokyo 103-8666 (JP)**

(72) Inventors:
• **SENTO Yuichiro**
**Nagoya-shi, Aichi 455-8502 (JP)**
• **HIRATA Shin**
**Nagoya-shi, Aichi 455-8502 (JP)**
• **HAMAGUCHI Mitsushige**
**Nagoya-shi, Aichi 455-8502 (JP)**

(74) Representative: **Mewburn Ellis LLP
Aurora Building
Counterslip
Bristol BS1 6BX (GB)**

(54) **FIBER-REINFORCED RESIN MOLDED ARTICLE AND MOLDING MATERIAL**

(57) A fiber-reinforced resin molded article containing carbon fibers (A) and a thermoplastic resin (B), characterized in that the carbon fibers (A) are contained at an amount of 5-40 parts by weight with respect to a total of 100 parts by weight of the carbon fibers (A) and the thermoplastic resin (B), and the carbon fibers (A) are such that 1,000 carbon fibers (A) randomly selected from a molded article have a fiber length long/short ratio, determined by the following equation 1, of 2 or more and 20 or less. Fiber length long/short ratio = $\Sigma (L_{0.6})/\Sigma (L_{0.1})$···(Equation 1) $L_{0.6}$: length of fiber having a fiber length of 0.6 mm or more (mm) $L_{0.1}$: length of fiber having a fiber length of 0.1 mm or less (mm) The present invention makes it possible to provide a fiber-reinforced resin molded article that can achieve both excellent flowability and mechanical properties and also has an excellent appearance quality, and a fiber-reinforced resin molding material that realizes this.

**EP 4 660 220 A1**

## Description

Technical Field of the Invention

The present invention relates to a molded article containing carbon fibers as reinforcing fibers and a thermoplastic resin, and to a molding material containing carbon fibers and a thermoplastic resin.

Background Art of the Invention

Fiber-reinforced resins comprising reinforcing fibers and thermoplastic resins are widely used in various industrial applications due to their light weight and excellent mechanical properties. In particular, molded articles made by molding pelletized molding materials using molding methods such as injection molding and stamping molding excellent in economy and productivity are frequently utilized for parts of automobile equipment and for parts and housings of personal computers, office automation equipment, audiovisual equipment, mobile phones, telephones, home appliances, toys, and other electric and electronic equipment.

In particular, fiber-reinforced resins that use carbon fibers as reinforcing fibers are frequently used when lightweight and high mechanical properties are required at high levels because they exhibit high tensile strength and elastic modulus despite being lightweight due to the excellent specific strength of carbon fibers.

Patent document 1 discloses a molded article excellent in mechanical properties obtained by injection molding long fiber-reinforced thermoplastic resin pellets containing at least reinforcing fibers having substantially the same length as the pellets. Patent documents 2, 3, and 4 disclose that a molded article having improved mechanical properties and appearance quality can be obtained by injection molding thermoplastic resin pellets in which two kinds of reinforcing fibers having a long fiber length and reinforcing fibers having a short fiber length are combined with a thermoplastic resin.

Prior art documents

Patent documents

    Patent document 1: JP-A-HEI 10-138379
    Patent document 2: JP-A-2006-181776
    Patent document 3: JP-A- 2018-162337
    Patent document 4: JP-A-HEI 10-138244

Summary of the Invention

Problems to be solved by the Invention

In recent years, however, molded articles have become smaller, thinner, and more complicated, requiring molding materials to have high moldability. This has created a demand for materials to have a high level of balance between excellent flowability and mechanical properties that can achieve small, thin and complicated shapes.

Conventionally, fiber-reinforced resin molding materials containing reinforcing fibers tended to have a decrease in flowability in correlation with the improvement in mechanical properties due to the fiber length. In particular carbon fibers exhibit superior specific strength and specific elastic modulus as compared with other reinforcing fibers such as glass fibers, but generally tended to cause fiber interference during molding due to their small fiber diameter, making it difficult to improve flowability. However, in order to achieve further smaller, thinner, and more complicated shapes for molded articles, there is a demand for molded articles that can maintain high mechanical properties while showing better flowability than before.

Accordingly, in view of the above-described problems and needs, an object of the present invention is to provide a fiber-reinforced resin molded article that achieves both excellent flowability and mechanical properties and also has an excellent appearance quality, and a fiber-reinforced resin molding material that realizes this.

Means for solving the Problems

To achieve the above-described objects, the present invention has the following configurations.

    (1) A fiber-reinforced resin molded article containing carbon fibers (A) and a thermoplastic resin (B), characterized in that the carbon fibers (A) are contained at an amount of 5-40 parts by weight with respect to a total of 100 parts by weight of the carbon fibers (A) and the thermoplastic resin (B), and the carbon fibers (A) are such that 1,000 carbon fibers (A) randomly selected from a molded article have a fiber length long/short ratio, determined by the following equation 1, of 2 or more and 20 or less.

$$\text{Fiber length long/short ratio} = \Sigma\ (L_{0.6})/\Sigma\ (L_{0.1}) \cdots \text{(Equation 1)}$$

$L_{0.6}$: length of fiber having a fiber length of 0.6 mm or more (mm)
$L_{0.1}$: length of fiber having a fiber length of 0.1 mm or less (mm)
Further, the equation 1 can be modified to a form of the following equation 1-2.

$$\text{Fiber length long/short ratio} = \Sigma(M_{0.6} \times N_{0.6})/\Sigma(M_{0.1} \times N_{0.1}) \cdots \text{(Equation 1-2)}$$

$M_{0.6}$: each length of fiber having a length of 0.6 mm or more (mm)
$N_{0.6}$: number of fibers having each length with respect to fibers having a length of 0.6 mm or more
$M_{0.1}$: length of each fiber having a length of 0.1 mm or less (mm)
$N_{0.1}$: number of fibers having each length with respect to fibers having a length of 0.1 mm or less

(2) The fiber-reinforced resin molded article according to (1), wherein 1,000 carbon fibers (A) randomly selected from a molded article have a short fiber percentage, determined by the following equation 2, of 15% or less.

$$\text{Short fiber percentage} = \Sigma\ (L_{0.1})/\Sigma\ (Li) \times 100\ (\%) \cdots \text{(Equation 2)}$$

$L_{0.1}$: length of fiber having a fiber length of 0.1 mm or less (mm)
Li: fiber length of each fiber (mm)
Further, the equation 2 can be modified to a form of the following equation 2-2.

$$\text{Short fiber percentage} = \Sigma(M_{0.1} \times N_{0.1})/\Sigma(Mi \times Ni) \times 100\ (\%) \cdots \text{(Equation 2-2)}$$

$M_{0.1}$: length of fibers with a fiber length of 0.1 mm or less (mm)
$N_{0.1}$: number of fibers of $M_{0.1}$
Mi: length of each fiber (mm)
Ni: number of Mi fibers

(3) The fiber-reinforced resin molded article according to (1) or (2), wherein 1,000 carbon fibers (A) randomly selected from a molded article have an extent of fiber length distribution, determined by the following equation 3, of 1.4 or more.

$$\text{Extent of fiber length distribution} = (\Sigma\ (Li^2)/\Sigma\ (Li))/(\Sigma\ Li/1000) \cdots \text{(Equation 3)}$$

Li: fiber length of each fiber (mm)
Further, the equation 3 can be modified to a form of the following equation 3-2.

$$\text{Extent of fiber length distribution} = (\Sigma(Mi^2 \times Ni)$$

$$/\Sigma(Mi \times Ni))/(\Sigma(Mi \times Ni)/\Sigma Ni) \cdots (\text{Equation 3-2})$$

Mi: length of each fiber (mm)
Ni: number of Mi fibers

(4) The fiber-reinforced resin molded article according to any of (1) to (3), wherein the carbon fibers (A) contain recycled carbon fibers.
(5) The fiber-reinforced resin molded article according to any of (1) to (4), wherein the carbon fibers (A) contained in the fiber-reinforced resin molded article include two kinds of carbon fibers (A-1) and carbon fibers (A-2) different from each other in ratios of $I_{1360}/I_{1580}$ and $I_{1480}/I_{1580}$ determined as ratios of a maximum value $I_{1360}$ of Raman scattering intensity of the carbon fiber surface appearing in the vicinity of a Raman shift of 1360 cm$^{-1}$, a minimum value $T_{1430}$ of Raman scattering intensity of the carbon fiber surface appearing in the vicinity of a Raman shift of 1480 cm$^{-1}$, and a maximum value $I_{1580}$ of Raman scattering intensity of the carbon fiber surface appearing in the vicinity of a Raman shift of 1580 cm$^{-1}$, and the carbon fibers (A-2) have a larger value of $I_{1360}/I_{1580}$ or the same value and a smaller value of $I_{1480}/I_{1580}$ as compared with the carbon fibers (A-1) .

(6) The fiber-reinforced resin molded article according to (5), wherein, among the carbon fibers (A) contained in the fiber-reinforced resin molded article, in fibers having a fiber length of 0.6 mm or more, a number ratio of the carbon fibers (A-1) to the carbon fibers (A-2), that is a ratio of the number of (A-1) having 0.6 mm or more to the number of (A-2) having 0.6 mm or more, is 100:0 to 50:50.

(7) The fiber-reinforced resin molded article according to (5) or (6), wherein the carbon fibers (A-2) are contained at an amount of 10 to 70 parts by weight with respect to 100 parts by weight of the carbon fibers (A).

(8) The fiber-reinforced resin molded article according to any of (5) to (7), wherein a ratio of a fiber diameter $\varphi$(A-1) of the carbon fibers (A-1) to a fiber diameter $\varphi$(A-2) of the carbon fibers (A-2), $\varphi$(A-1)/$\varphi$(A-2), is 1.2 or more and 2.0 or less.

(9) A fiber-reinforced resin molding material which is a fiber-reinforced resin molding material (C) containing carbon fibers (A) and a thermoplastic resin (B), characterized in that the fiber-reinforced resin molding material (C) contains a fiber-reinforced resin molding material (C-1) containing carbon fibers (CF-1), which have a fiber length of 3 mm or more and 10 mm or less and which are oriented in a longitudinal direction of the molding material, and the thermoplastic resin (B), and a fiber-reinforced resin molding material (C-2) containing short fiber-like carbon fibers (CF-2) and the thermoplastic resin (B), and a ratio of a fiber diameter $\varphi$(CF-1) of the carbon fibers (CF-1) to a fiber diameter $\varphi$(CF-2) of the carbon fibers (CF-2), $\varphi$(CF-1)/$\varphi$(CF-2), is 1.2 or more and 2.0 or less.

(10) The fiber-reinforced resin molding material according to (9), wherein the carbon fibers (CF-2) are such that 1,000 carbon fibers (CF-2) randomly selected from the fiber-reinforced resin molding material (C-2) have a fiber length, determined by the following equation 4, of 0.1 mm or more and 0.4 mm or less.

$$\text{Fiber length of carbon fibers (CF-2)} = \Sigma \,(\text{Li}) \,/\, 1000 \cdots \text{(Equation 4)}$$

Li: length of each fiber (mm)

(11) The fiber-reinforced resin molding material according to (9) or (10), wherein the fiber-reinforced resin molding material (C-1) contains a compound (D) different from the thermoplastic resin (B), that exists in a state of filling spaces between the carbon fibers (CF-1), in addition to the carbon fibers (CF-1) and the thermoplastic resin (B).

(12) The fiber-reinforced resin molding material according to any of (9) to (11), wherein the carbon fibers (CF-2) contain recycled carbon fibers.

<u>Effect according to the Invention</u>

According to the present invention, it is possible to obtain a molded article that has all of a thin wall property, a complicated shape, and mechanical properties. The molding material of the present invention has excellent flowability during molding and can easily produce molded articles with excellent mechanical properties, so it can be applied not only to molding methods such as injection molding, transfer molding, blow molding, and insert molding, but also to a wide range of molding methods such as plunger molding, press molding, and stamping molding.

The molded article of the present invention has excellent flowability during molding, while maintaining excellent mechanical properties, and can be used for automobile parts such as thrust washers, oil filters, seals, bearings, gears, cylinder head covers, bearing retainers, intake manifolds, and pedals, semiconductor and liquid crystal manufacturing equipment parts such as silicon wafer carriers, IC chip trays, electrolytic capacitor trays, and insulating films, industrial machine parts such as compressor parts such as pumps, valves, and seals, and aircraft cabin interior parts, medical equipment parts such as sterilization equipment, columns, and piping, food and beverage manufacturing equipment parts, and parts and housings of electric and electronic equipment such as personal computers, office automation equipment, audiovisual equipment, mobile phones, telephones, home appliances, and toys. By using the molding material of the present invention, a molded article having a small wall thickness of 0.5 to 2 mm can be obtained relatively easily, and since the carbon fibers used as the reinforcing fibers have electrical conductivity, electromagnetic wave shielding properties can be imparted, making it suitable for parts and housings of electric and electronic equipment.

<u>Embodiments for carrying out the Invention</u>

Hereinafter, the present invention will be explained in detail together with embodiments.

<Molded article>

The molded article of the present invention contains carbon fibers (A) and a thermoplastic resin (B). By setting the fiber length long/short ratio of the carbon fibers (A) within a certain range, it is possible to contain a large number of short carbon fibers while leaving long carbon fibers, and it is possible to achieve both excellent mechanical properties and thin wall properties.

[Carbon fibers (A)]

The carbon fibers (A) in the present invention will be explained.

The kind of carbon fibers (A) in the present invention is not particularly restricted, and PAN (polyacrylonitrile), pitch, rayon, and other-type carbon fibers are preferably used. In particular, from the viewpoint of high strength, carbon fibers having a tensile strength of 3,000 MPa or more are preferred, more preferably 4,000 MPa or more. From the viewpoint of high elastic modulus, carbon fibers having a tensile elastic modulus of 200 GPa or more are preferred, more preferably 300 GPa or more. In particular, carbon fibers having an elastic modulus of 300 GPa or more, which are difficult to maintain a long fiber length, are preferred because they can more effectively exhibit the effects of the molding material of the present invention described later. The fiber diameter of the carbon fibers (A) is preferably 3 to 20 $\mu$m, more preferably 4 to 15 $\mu$m, and further preferably 4.2 to 13 $\mu$m. If the fiber diameter is less than 3 $\mu$m, the fiber intersection points in the molded article will increase significantly, and the thinness and surface appearance of the molded article will be impaired. Further, recycled carbon fibers can be preferably used in combination from the viewpoints of the economic efficiency and environmental load of the obtained molded article.

It is preferred that a binder is attached to the carbon fibers (A). By attaching a binder to the carbon fibers (A), the handleability during transportation of the carbon fibers, the processability during the process of producing a molding material, and the mechanical properties and appearance properties of a molded article can be improved. There is no particular limitation on the kind of binder, but one or more binders such as epoxy resins, urethane resins, acrylic resins, and various thermoplastic resins can be used alone or in combination.

The amount of carbon fibers (A) is preferably 5 to 40 parts by weight, more preferably 8 to 35 parts by weight, and further preferably 10 to 30 parts by weight, with respect to 100 parts by weight of the molded article. If the amount of the carbon fibers (A) is less than 5 parts by weight, the mechanical properties may be insufficient, whereas if the amount exceeds 40 parts by weight, the carbon fibers (A) may be exposed on the surface of the molded article, deteriorating the surface appearance.

The fiber length long/short ratio of the carbon fibers (A) in a molded article, as defined below, is 2 or more and 20 or less. More preferably, it is 3 or more and 15 or less, and further preferably, it is 4 or more and 13 or less. When carbon fibers are used, fibers with a fiber length of 0.6 mm or more have a large effect on improving the impact strength of a molded article , but may be accompanied by a decrease in flowability due to fiber interference during molding, which may cause a loss of thinness of the molded article. Fibers with a fiber length of 0.1 mm or less are less likely to cause fiber interference during molding and can improve flowability, so that the thinness of the molded article can be improved, but the improvement rate of strength and elastic modulus is significantly lower than that of fibers with a fiber length of 0.6 mm or more. Therefore, when the fiber length long/short ratio relating to the ratio of carbon fibers with a fiber length of 0.6 mm or more to carbon fibers with a fiber length of 0.1 mm or less is less than 2, the mechanical properties may be insufficient, and when it exceeds 20, the carbon fibers (A) may be exposed on the surface of the molded article, which may cause a decrease in the surface appearance.

Here, the "fiber length long/short ratio" in the present invention is a ratio of fibers having a fiber length of 0.6 mm or more to fibers having a fiber length of 0.1 mm or less, calculated from the following equation 1.

$$\text{Fiber length long/short ratio} = \Sigma(L_{0.6})/\Sigma(L_{0.1}) \cdots \text{(Equation 1)}$$

$L_{0.6}$: length of fiber having a fiber length of 0.6 mm or more (mm)
$L_{0.1}$: length of fiber having a fiber length of 0.1 mm or less (mm)

The fiber length long/short ratio can be determined by the following method. Using an optical microscope with a hot stage, a test piece is appropriately cut out from a molded article, and is heated while sandwiched between glass plates on a hot stage set appropriately at 150 to 500°C according to the melting temperature of the thermoplastic resin (B) used, the carbon fibers (A) are uniformly dispersed in a film shape, and it is observed with the optical microscope (50 to 200 magnifications) in a state where the thermoplastic resin (B) is molten. The fiber lengths of 1,000 randomly selected carbon fibers (A) are measured, and the long/short ratio is calculated from the above-described equation 1. Alternatively, the test piece cut out from the molded article is put into a solvent in which the thermoplastic resin (B) dissolves, and is appropriately heated to prepare a solution in which the carbon fibers (A) are uniformly dispersed. The solution is then filtered, and the carbon fibers (A) dispersed on the filter paper are observed with the optical microscope (50 to 200 magnifications). The fiber lengths of 1,000 randomly selected carbon fibers (A) are measured, and the long/short ratio is calculated from the above-described equation 1. The filter paper used in this case may be a quantitative filter paper (model number: No. 5C) supplied by Advantec Co., Ltd., etc.

The percentage of short fibers having a fiber length of 0.1 mm or less among the carbon fibers (A) in the molded article is preferably 15% or less, more preferably 10% or less, and further preferably 5% or less. There is no particular restriction on the lower limit, and it may be 0%. If the short fiber percentage exceeds 15%, the mechanical properties may be insufficient.

Here, the "short fiber percentage" in the present invention is the percentage of fibers having a length of 0.1 mm or less, calculated from the following equation 2.

$$\text{Short fiber percentage} = \Sigma \, (L_{0.1})/\Sigma \, (Li) \times 100 \; (\%) \cdots (\text{Equation 2})$$

$L_{0.1}$: length of fiber having a fiber length of 0.1 mm or less (mm)
Li: fiber length of each fiber (mm)

The short fiber percentage is calculated from the above-described equation 2 by measuring the fiber lengths of 1,000 randomly selected carbon fibers (A) in the same manner as in the measurement of the fiber length long/short ratio.

The extent of fiber length distribution of the carbon fibers (A) in the molded article is preferably 1.4 or more, more preferably 1.5 or more, and further preferably 1.7 or more. The upper limit is 30. If the extent of fiber length distribution is less than 1.4, it may be difficult to achieve both mechanical properties and flowability.

Here, the "extent of fiber length distribution" in the present invention is a value calculated from the following equation 3.

$$\text{Extent of fiber length distribution} = (\Sigma \, (Li^2)/\Sigma \, (Li))/(\Sigma \, Li/1000) \cdots (\text{Equation 3})$$

Li: fiber length of each fiber (mm)

The above-described extent of fiber length distribution is calculated by measuring the fiber lengths of 1,000 randomly selected carbon fibers (A) in the same manner as in the case of measuring the fiber length long/short ratio, and then calculating the extent of fiber length distribution from the above-described equation 3.

The carbon fibers (A) contained in the molded article of the present invention preferably contain recycled carbon fibers. Here, the recycled carbon fibers mean carbon fibers recovered and reused from a molded article containing used carbon fibers, a resin composition containing carbon fibers, or process waste materials of a molded article.

The carbon fibers (A) in the molded article may contain two or more kinds of carbon fibers having different properties such as different strengths, elastic moduli, fiber diameters, surface conditions, and fiber lengths depending on the purpose. Although Three or more kinds of carbon fibers may be contained, in the molded article of the present invention, it is preferred that the carbon fibers (A) contain two kinds of carbon fibers (A-1) and carbon fibers (A-2) having different properties, and that the carbon fibers (A-1) have a fiber length of 0.6 mm or more. It is also preferred that the carbon fibers (A-2) are made of a material having a fiber length shorter than that of the carbon fibers (A-1), and this makes it possible to improve the filling property into the fine details and the thin wall property while maintaining the mechanical properties of the obtained molded article.

Methods for distinguishing between carbon fibers (A-1) and carbon fibers (A-2) include known technologies for analyzing carbon fibers, and it is possible to distinguish them by optical microscope observation, scanning electron microscope observation, Fourier transform infrared spectroscopy, Raman spectroscopy, X-ray photoelectron spectroscopy, X-ray diffraction method, or the like. In the present invention, in order to distinguish between carbon fibers (A-1) and carbon fibers (A-2), a laser Raman spectrometer is used to determine ratios of $I_{1360}/I_{1580}$ and $I_{1480}/I_{1580}$ determined as ratios of a maximum value $I_{1360}$ of Raman scattering intensity of the carbon fiber surface appearing in the vicinity of a Raman shift of 1360 cm$^{-1}$, a minimum value $I_{1480}$ of Raman scattering intensity of the carbon fiber surface appearing in the vicinity of a Raman shift of 1480 cm$^{-1}$, and a maximum value $I_{1580}$ of Raman scattering intensity of the carbon fiber surface appearing in the vicinity of a Raman shift of 1580 cm$^{-1}$, in the Raman spectrum obtained, and the carbon fibers (A-2) are defined as carbon fibers having a larger value of $I_{1360}/I_{1580}$ or the same value and a smaller value of $I_{1480}/I_{1580}$ as compared with the carbon fibers (A-1) .

In the fibers having a fiber length of 0.6 mm or more in the carbon fibers (A) in the molded article of the present invention, the ratio A-1:A-2 of the number of the carbon fibers (A-1) to the number of the carbon fibers (A-2) is preferably 100:0 to 50:50, more preferably 100:0 to 80:20, and further preferably 100:0. It is preferred that the difference between the number ratios of the carbon fibers (A-1) to the carbon fibers (A-2) having a fiber length of 0.6 mm or more is large, and this improves the flowability during molding while maintaining the mechanical properties of the molded article, and facilitates improvement in the filling property of fine details.

From the viewpoint of reducing waste, it is preferred to use recycled carbon fibers for the carbon fibers (A-2) among the carbon fibers (A-1) and the carbon fibers (A-2). As the recycled carbon fibers, fibers produced by a known production method can be used, and for example, a method is exemplified for obtaining recycled carbon fibers by carrying out each of the following steps (a) to (c).

(a) A crushing step for crushing fiber-reinforced resin waste to produce crushed pieces having a predetermined fiber length.
(b) A pyrolysis treatment step for heating the crushed pieces while supplying them at a fixed quantity to a pyrolysis furnace, and removing the matrix resin component to obtain a pyrolyzed product.
(c) A classification step for classifying the pyrolyzed product according to each fiber length to obtain recycled carbon fibers.

A binder may be added to the recycled carbon fibers after the classification step.

The recycled carbon fibers are preferably contained in an amount of 10 to 70 parts by weight, and more preferably 20 to 70 parts by weight, with respect to 100 parts by weight of the carbon fibers (A). If the amount is less than 10 parts by weight, the filling property to fine details may be insufficient, and if the amount exceeds 70 parts by weight, the mechanical properties may be insufficient.

It is preferred that the two kinds of the carbon fibers (A-1) and the carbon fibers (A-2) contained in the carbon fibers (A) have different fiber diameters. It is preferred that the carbon fibers (A-1) have a larger diameter than the carbon fibers (A-2), and it is more preferable that the ratio of the fiber diameter $\varphi(A-1)$ of the carbon fibers (A-1) to the fiber diameter $\varphi(A-2)$ of the carbon fibers (A-2), $\varphi(A-1)/\varphi(A-2)$, is 1.2 or more and 2.0 or less. It is more referable that it is 1.3 or more and 1.8 or less. By controlling it in the above range, it becomes easy to maintain the filling property to the fine details while leaving the fiber length in the molded article.

The carbon fibers (A-2) may be in a single fiber dispersion state or may partially contain bundled fibers. By containing the bundled fibers, the impact strength of the molded article is increased as compared with a state where single fibers are dispersed, but the bundled fibers may protrude from the surface of the molded article. The single fiber dispersion state is preferable, and as compared with a state where the bundled fibers are contained, the impact strength is slightly decreased, but the appearance properties and mechanical properties of the molded article are excellent.

Further, it is preferred that the carbon fibers (A-1) are carbon fibers originating from (CF-1) contained in a molding material (C-1) described later, and the carbon fibers (A-2) are carbon fibers originating from (CF-2) contained in a molding material (C-2) described later.

[Thermoplastic resin (B)]

The molded article of the present invention contains 60 to 95 parts by weight of the thermoplastic resin (B) with respect to 100 parts by weight of the total of the carbon fibers (A) and the thermoplastic resin (B).

In the present invention, the thermoplastic resin (B) is preferably one having a molding temperature (melting temperature) of 200 to 450°C, and examples thereof include polyolefin resins, polystyrene resins, polyamide resins, halogenated vinyl resins, polyacetal resins, saturated polyester resins, polycarbonate resins, polyaryl sulfone resins, polyaryl ketone resins, polyphenylene ether resins, polyphenylene sulfide resins, polyaryl ether ketone resins, polyether sulfone resins, polyphenylene sulfide sulfone resins, polyarylate resins, polyamide resins, etc., and two or more of these may be used. Among the thermoplastic resins, polyolefin resins, polyamide resins, polycarbonate resins, and polyarylene sulfide resins, which are lightweight and have an excellent balance between mechanical properties and moldability, are more preferable.

The polyolefin resin referred to here includes both unmodified and modified ones. For example, an unmodified polypropylene resin is specifically a homopolymer of propylene or a copolymer of propylene and at least one $\alpha$-olefin, conjugated diene, non-conjugated diene, or the like. As $\alpha$-olefins copolymerized with propylene, exemplified are $\alpha$-olefins (excluding propylene) having 2 to 12 carbon atoms, such as ethylene, 1-butene, 3-methyl-1-butene, 4-methyl-1-pentene, 3-methyl-1-pentene, 4-methyl-1-hexene, 4,4 dimethyl-1-hexene, 1-nonene, 1-octene, 1-heptene, 1-hexene, 1-decene, 1-undecene, and 1-dodecene. As conjugated dienes and non-conjugated dienes copolymerized with propylene, exemplified are butadiene, ethylidene norbornene, dicyclopentadiene , 1,5-hexadiene, etc. Two or more of these may be used. As the skeleton structure of the unmodified polypropylene resin, exemplified are a homopolymer of propylene, a random or block copolymer of propylene and the other monomers, a random or block copolymer of propylene and other thermoplastic monomers, and the like. For example, polypropylene, ethylene-propylene copolymer, propylene-1-butene copolymer, ethylene-propylene-1-butene copolymer, etc. are preferably exemplified. A homopolymer of propylene is preferred from the viewpoint of further improving the rigidity of the molded article, and a random or block copolymer of propylene and the other monomers is preferred from the viewpoint of further improving the impact strength of the molded article.

Further, as the modified polypropylene resin, an acid-modified polypropylene resin is preferred, and a polypropylene resin having a carboxylic acid and/or a salt thereof bonded to the polymer chain is more preferred. The acid-modified polypropylene resin can be obtained by various methods, for example, by graft polymerization of a monomer having a neutralized or non-neutralized carboxylic acid group and/or a monomer having a saponified or non-saponified carboxylic acid ester to a polypropylene resin. Here, as the monomer having a neutralized or non-neutralized carboxylic acid group or the monomer having a saponified or non-saponified carboxylic acid ester group, for example, exemplified are ethylene-based unsaturated carboxylic acids, their anhydrides, esters thereof, etc. Furthermore, compounds having unsaturated vinyl groups other than olefins or the like can also be exemplified.

As the ethylene-based unsaturated carboxylic acids, exemplified are (meth)acrylic acid, maleic acid, fumaric acid, tetrahydro phthalic acid, itaconic acid, citraconic acid, crotonic acid, isocrotonic acid, and the like, and as their anhydrides, exemplified are Nadic acid TM (endo-cis-bicyclo[2,2,1]hept-5-ene-2,3-dicarboxylic acid), maleic anhydride, citraconic anhydride, and the like.

As the esters of ethylene-based unsaturated carboxylic acids, exemplified are (meth)acrylic acid esters such as methyl (meth)acrylate, ethyl (meth)acrylate, propyl (meth)acrylate, n-butyl (meth)acrylate, iso-butyl (meth)acrylate, tert-butyl (meth)acrylate, n-amyl (meth)acrylate, isoamyl (meth)acrylate, n-hexyl (meth)acrylate, 2-ethylhexyl (meth)acrylate, octyl (meth)acrylate, decyl (meth)acrylate, dodecyl (meth)acrylate, octadecyl (meth)acrylate, stearyl (meth)acrylate, tridecyl (meth)acrylate, lauroyl (meth)acrylate, cyclohexyl (meth)acrylate, benzyl (meth)acrylate, phenyl (meth)acrylate, isobornyl (meth)acrylate, dicyclopentanyl (meth)acrylate, dicyclopentenyl (meth)acrylate, dimethyl aminoethyl (meth) acrylate, and diethyl aminoethyl (meth)acrylate; hydroxyl group-containing (meth)acrylic acid esters such as hydroxyethyl acrylate, 2-hydroxyethyl (meth)acrylate, 2-hydroxypropyl (meth)acrylate, 4-hydroxybutyl acrylate, lactone-modified hydroxyethyl (meth)acrylate, and 2-hydroxy-3-phenoxypropyl acrylate; epoxy group-containing (meth)acrylic acid esters such as glycidyl (meth)acrylate, and methyl glycidyl (meth)acrylate; and amino alkyl (meth)acrylates such as N,N-dimethyl aminoethyl (meth)acrylate, N,N-diethyl aminoethyl (meth)acrylate, N,N-dimethyl aminopropyl (meth)acrylate, N,N-dipropyl aminoethyl (meth)acrylate, N,N-dibutyl aminoethyl (meth)acrylate, and N,N-dihydroxy ethyl aminoethyl (meth) acrylate; etc.

As the monomers having an unsaturated vinyl group other than olefins, exemplified are isocyanate group-containing vinyls such as vinyl isocyanate and isopropenyl isocyanate; aromatic vinyls such as styrene, $\alpha$-methyl styrene, vinyl toluene and t-butyl styrene; amide group-containing vinyls such as acrylamide, methacrylamide, N-methylol methacrylamide, N-methylol acrylamide, diacetone acrylamide and maleic amide; vinyl esters such as vinyl acetate and vinyl propionate; unsaturated sulfonic acids such as styrene sulfonic acid, sodium styrene sulfonate and 2-acrylamide-2-methylpropanesulfonic acid; unsaturated phosphoric acids such as mono(2-methacryloyloxyethyl) acid phosphate and mono(2-acryloyloxyethyl) acid phosphate; etc.

Two or more of these may be used. Further, among these, ethylene-based unsaturated carboxylic acid anhydrides are preferred, and maleic anhydride is more preferred.

Here, in order to improve the flexural strength and tensile strength of the molded article, it is preferable to use both unmodified and modified polypropylene resins, and in particular, from the viewpoint of the balance between flame retardancy and mechanical properties, it is preferable to use the unmodified and modified polypropylene resins in a weight ratio of 95/5 to 75/25, more preferably 95/5 to 80/20, and further preferably 90/10 to 80/20.

Further, polyamide resins are resins whose main raw materials are amino acids, lactams, or diamines and dicarboxylic acids. As typical examples of the main raw materials, exemplified are amino acids such as 6-aminocaproic acid, 11-aminoundecanoic acid, 12-aminododecanoic acid, and para aminomethyl benzoic acid; lactams such as $\varepsilon$-caprolactam and $\omega$-laurolactam; aliphatic diamines such as tetramethylene diamine, hexamethylene diamine, 2-methylpentamethylene diamine, nonamethylene diamine, undecamethylene diamine, dodecamethylene diamine, 2,2,4-/2,4,4-trimethylhexamethylene diamine, and 5-methylnonamethylene diamine; aromatic diamines such as meta xylylene diamine and para xylylene diamine; alicyclic diamines such as 1,3-bis(aminomethyl)cyclohexane, 1,4-bis(aminomethyl)cyclohexane, 1-amino-3-aminomethyl-3,5,5-trimethyl cyclohexane, bis(4-aminocyclohexyl)methane, bis(3-methyl-4-aminocyclohexyl)methane, 2,2-bis(4-aminocyclohexyl)propane, bis(aminopropyl)piperazine, and aminoethyl piperazine; aliphatic dicarboxylic acids such as adipic acid, suberic acid, azelaic acid, sebacic acid, and dodecanedioic acid; aromatic dicarboxylic acids such as terephthalic acid, isophthalic acid, 2-chloroterephthalic acid, 2-methylterephthalic acid, 5-methylisophthalic acid, 5-sodium sulfoisophthalic acid, hexahydro terephthalic acid, and hexahydro isophthalic acid; alicyclic dicarboxylic acids such as 1,4-cyclohexane dicarboxylic acid, 1,3-cyclohexane dicarboxylic acid, and 1,2-cyclohexane dicarboxylic acid; etc. Two or more of these may be used.

In the present invention, polyamide resins having a melting point of 170°C or higher are particularly useful from the viewpoint of their excellent heat resistance and strength. As specific examples thereof, exemplified are polycaproamide (nylon 6), polyhexamethylene adipamide (nylon 66), polycaproamide/polyhexamethylene adipamide copolymer (nylon 6/66), polytetramethylene adipamide (nylon 46), polyhexamethylene sebacamide (nylon 610), polyhexamethylene dodecamide (nylon 612), polydecamethylene decamide (nylon 1010), polydecamethylene dodecamide (nylon 1012), polydodecamethylene dodecamide (nylon 1212), polyundecane amide (nylon 11), polydodecane amide (nylon 12), polyhexamethylene terephthalamide/polycaproamide copolymer (nylon 6T/6), polyhexamethylene adipamide/polyhexamethylene terephthalamide copolymer (nylon 66/6T), polyhexamethylene adipamide/polyhexamethylene isophthalamide copolymer (nylon 66/6I), polyhexamethylene adipamide/polyhexamethylene terephthalamide/polyhexamethylene isophthalamide copolymer (nylon 66/6T/6I), polyhexamethylene terephthalamide/polyhexamethylene isophthalamide copolymer (nylon 6T/6I), polyhexamethylene terephthalamide/polydodecane amide copolymer (nylon 6T/12), polyhexamethylene terephthalamide/poly(2-methylpentamethylene) terephthalamide copolymer (nylon 6T/M5T), polyxylylene adipamide (nylon XD6), polynonamethylene terephthalamide (nylon 9T), copolymers thereof, etc. Two or more of these may be used. Among these, nylon 6, nylon 66, nylon 610, nylon 11, nylon 12 and nylon 9T are more preferred.

There is no particular restriction on the degree of polymerization of these polyamide resins, and the relative viscosity of a solution prepared by dissolving 0.25 g of the polyamide resin in 25 ml of 98% concentrated sulfuric acid at 25°C is preferably in the range of 1.5 to 5.0, and more preferably in the range of 2.0 to 3.5.

Further, the polycarbonate resin is obtained by reacting a dihydric phenol with a carbonate precursor. It may be a copolymer obtained by using two or more dihydric phenols or two or more carbonate precursors. As examples of the reaction method, exemplified are an interfacial polymerization method, a melt transesterification method, a solid-phase transesterification method of a carbonate prepolymer, a ring-opening polymerization method of a cyclic carbonate compound, etc. Such polycarbonate resins themselves are known, and for example, the polycarbonate resins described in JP-A-2002-129027 can be used.

As the dihydric phenols, exemplified are 1,1-bis(4-hydroxyphenyl)-3,3,5-trimethylcyclohexane, bis(4-hydroxyphenyl)alkane (such as bisphenol A), 2,2-bis{(4-hydroxy-3-methyl)phenyl}propane, $\alpha,\alpha'$-bis(4-hydroxyphenyl)-m-diisopropyl benzene, 9,9-bis(4-hydroxy-3-methylphenyl)fluorene, etc. Two or more of these may be used. Among these, bisphenol A is preferred, and a polycarbonate resin more excellent in impact resistance can be obtained. On the other hand, copolymers obtained by using bisphenol A and other dihydric phenols are excellent in terms of high thermal resistance or low water absorption.

As the carbonate precursor, for example, a carbonyl halide, a carbonic acid diester or a haloformate or the like is used, and specifically, exemplified is phosgene, diphenyl carbonate, dihaloformate of dihydric phenol, or the like.

In producing a polycarbonate resin from the above-described dihydric phenol and carbonate precursor, a catalyst, a terminal terminator, an antioxidant for preventing oxidation of the dihydric phenol, and the like, may be used as needed.

Further, the polycarbonate resin in the present invention includes a branched polycarbonate resin copolymerized with a trifunctional or higher polyfunctional aromatic compound, a polyester carbonate resin copolymerized with an aromatic or aliphatic (including alicyclic) bifunctional carboxylic acid, a copolymerized polycarbonate resin copolymerized with a bifunctional alcohol (including alicyclic), and a polyester carbonate resin copolymerized with such a bifunctional carboxylic acid and a bifunctional alcohol. These polycarbonate resins are also known. Further, two or more of these polycarbonate resins may be used.

The molecular weight of the polycarbonate resin is not particularly restricted, but the viscosity average molecular weight is preferably 10,000 to 50,000. If the viscosity average molecular weight is 10,000 or more, the strength of the molded article can be further improved. More preferably, it is 15,000 or more, and further preferably, it is 18,000 or more. On the other hand, if the viscosity average molecular weight is 50,000 or less, the moldability is improved. More preferably, it is 40,000 or less, and further preferably, it is 30,000 or less. When two or more kinds of polycarbonate resins are used, it is preferable that the viscosity average molecular weight of at least one of them is within the above-described range. In this case, it is preferable to use a polycarbonate resin having a viscosity average molecular weight of more than 50,000, preferably more than 80,000, as the other polycarbonate resins. Such polycarbonate resins have high entropy elasticity, which is advantageous when used in conjunction with gas-assisted molding, etc., and also exhibit properties derived from the high entropy elasticity (anti-drip properties, drawdown properties, and properties that improve melting properties such as improved jetting).

The viscosity average molecular weight (M) of the polycarbonate resin is calculated by inserting the specific viscosity ($\eta$sp) determined at 20°C from a solution in which 0.7g of the polycarbonate resin is dissolved in 100 ml of methylene chloride into the following equation:

$$\eta sp/c = [\eta] + 0.45 \times [\eta]^2 c$$

(here, $[\eta]$ is a limiting viscosity.)

$$[\eta] = 1.23 \times 10^{-4} M^{0.83}$$

c=0.7

In the present invention, as examples of the polyarylene sulfide resin, exemplified are polyphenylene sulfide (PPS) resin, polyphenylene sulfide sulfone resin, polyphenylene sulfide ketone resin, random or block copolymers thereof, etc. Two or more of these may be used. Among them, polyphenylene sulfide resin is particularly preferably used.

The polyarylene sulfide resin can be produced by any method such as the method of obtaining a polymer having a relatively small molecular weight described, for example, in JP-B-45-3368, or the method of obtaining a polymer having a relatively large molecular weight described in JP-B-52-12240 and JP-A-61-7332.

The obtained polyarylene sulfide resin may be subjected to various treatments such as crosslinking/polymerization by heating in air, heat treatment in an inert gas atmosphere such as nitrogen or under a reduced pressure, washing with an organic solvent, hot water, an acid aqueous solution, or the like, and activation due to a functional group-containing compound such as an acid anhydride, an amine, an isocyanate, or a functional group-containing disulfide compound.

The melt viscosity of the polyarylene sulfide resin is preferably 80 Pa·s or less, more preferably 20 Pa·s or less, under conditions of a temperature of 310°C and a shear rate of 1000/sec. There is no particular lower limit, but it is preferably 5 Pa·s or more. Two or more polyarylene sulfide resins with different melt viscosities may be used in combination. Where, the melt viscosity can be measured using a Capilograph device (supplied by Toyo Seiki Co., Ltd.) under conditions of a die length of 10 mm and a die hole diameter of 0.5 to 1.0 mm.

As the polyarylene sulfide resin, polyphenylene sulfide resins commercially available as "TORELINA" (registered trademark) supplied by Toray Industries, Inc., "DIC.PPS" (registered trademark) supplied by DIC Corporation, "DURAFIDE" (registered trademark) supplied by Polyplastics Co., Ltd., and the like can also be used.

<Molding material>

The fiber-reinforced resin molded article of the present invention can be produced by molding, for example, the molding material described below by a known method. The fiber-reinforced resin molding material of the present invention contains carbon fibers (A) and a thermoplastic resin (B). By containing carbon fibers (A), it is possible to maintain the flowability while keeping the fiber length of the carbon fibers long, and to obtain a molded article that exhibits excellent mechanical properties.

The fiber-reinforced resin molded article of the present invention contains carbon fibers (A) and a thermoplastic resin (B). The kind of the thermoplastic resin (B) is not particularly restricted, and the thermoplastic resins described in the description of the thermoplastic resin (B) of the molded article can be exemplified. Further, the preferred kinds of the thermoplastic resins are also the same, and the reasons for their preference are also the same.

The fiber-reinforced resin molded article of the present invention can be produced by molding using a molding material containing a fiber-reinforced resin molding material (C-1) containing carbon fibers (CF-1) having a fiber length of 3 mm or more and 10 mm or less and oriented in the longitudinal direction of the molding material and a thermoplastic resin (B), and a fiber-reinforced resin molding material (C-2) containing short fiber-like carbon fibers (CF-2) and a thermoplastic resin (B) by a known method. It is preferable to dry-blend the fiber-reinforced resin molding material (C-1), which is a so-called long fiber pellet, and the fiber-reinforced resin molding material (C-2), which is a short fiber pellet, and subject the mixture to molding, and the contents of carbon fibers (A-1) derived from the carbon fibers (CF-1) contained in the molding material (C-1) and carbon fibers (A-2) derived from the carbon fibers (CF-2) contained in molding material (C-2) can be easily adjusted. Here, the dry blending differs from blending accompanied with melt kneading, and it means stirring and mixing a plurality of materials at a temperature at which the resin components do not melt, to produce a substantially uniform state, and is preferably used when using pellet-shaped molding materials, in case mainly such as injection molding or extrusion molding.

It is preferred that the carbon fibers (CF-1) contained in the molding material (C-1) and the carbon fibers (CF-2) contained in the molding material (C-2) have different fiber diameters, the carbon fibers (CF-1) have a larger diameter than the carbon fibers (CF-2), and the ratio of the fiber diameter $\varphi$(CF-1) of the carbon fibers (CF-1) to the fiber diameter $\varphi$(CF-2) of the carbon fibers (CF-2), $\varphi$(CF-1)/$\varphi$(CF-2), is 1.2 or more and 2.0 or less, and more preferably 1.3 or more and 1.8 or less. By controlling it in the above-described range, breakage of the carbon fibers (CF-1) during molding can be suppressed, and the fiber length long/short ratio, short fiber percentage, and extent of fiber length distribution in the molded article can be appropriately controlled, which is preferable. By suppressing the breakage of the carbon fibers (CF-1) to become fibers with a fiber length of less than 0.1 mm, high mechanical properties can be exhibited even with a small content of carbon fibers (CF-1).

<Molding material (C-1)>

The kind of the carbon fibers (CF-1) contained in the fiber-reinforced resin molding material (C-1) containing the carbon fibers (CF-1) having a fiber length of 3 mm or more and 10 mm or less and oriented in the longitudinal direction of the molding material and thermoplastic resin (B) is not particularly restricted, and the carbon fibers described in the description of the carbon fibers (A) of the molded article can be exemplified. The length of the carbon fibers (CF-1) is 3 to 10 mm.

Preferably, it is 5 to 9 mm. The carbon fibers (CF-1) are preferably in a state where single fibers are arranged in one direction. As preferred forms thereof, unidirectional fiber bundles, bidirectional fiber bundles, and multidirectional fiber bundles can be exemplified, but from the viewpoint of productivity in the process of producing the molding material, unidirectional fiber bundles are more preferably used. The carbon fibers (CF-1) are more advantageous in terms of economy as the number of single fibers of carbon fibers increases, and therefore, for example, when the molding material is formed into a pellet shape, the number of single fibers in one pellet is preferably 10,000 or more. On the other hand, since the number of single fibers of carbon fibers is greater, it tends to be disadvantageous with respect to the impregnability of the matrix resin, from the viewpoint of achieving both economic efficiency and impregnability, it is more preferable to use 15,000 to 100,000 fibers, and particularly preferably 20,000 to 50,000 fibers. Further, it is preferred that in the molding material the carbon fibers (CF-1) are aligned in the longitudinal direction of the molding material, and the length of the carbon fibers (CF-1) is substantially the same as the length of the molding material. Here, "aligned in the longitudinal direction of the molding material" indicates a state where the axial line of the long axis of the carbon fibers (CF-1) and the axial line of the long axis of the molding material are directed in the same direction, and the angular deviation between the axil lines is preferably 20° or less, more preferably 10° or less, and further preferably 5° or less. Moreover, "substantially the same length" means that, for example, in a pellet-shaped molding material, the carbon fibers (CF-1) are not cut in the middle of the inside of the pellet, and the carbon fibers (CF-1) significantly shorter than the entire length of the pellet are not substantially contained. Where, the entire length of the pellet is the length in the orientation direction of the carbon fibers (CF-1) in the pellet. By the condition where the carbon fibers (CF-1) have substantially the same length as the molding material, the length of the carbon fibers in the molded article can be made long, and excellent mechanical properties and dimensional accuracy can be obtained.

The fiber-reinforced resin molding material (C-1) of the present invention preferably contains, in addition to carbon fibers (CF-1) and thermoplastic resin (B), a compound (D) different from the thermoplastic resin (B) that exists in a state of filling the spaces between the carbon fibers (CF-1). By the presence of compound (D) in a state of filling the spaces between the fibers, the dispersion of the fibers during molding can be improved, and breakage of the fibers during molding can be suppressed.

The above-described compound (D) preferably has a lower melt viscosity than the thermoplastic resin (B). By the condition where the melt viscosity of the compound (D) is lower than that of the thermoplastic resin (B), when molding the molding material, the compound (D) has high flowability and the effect of dispersing the carbon fibers (CF-1) in the thermoplastic resin (B) can be further improved, and breakage of the fibers can be suppressed. Further, the compound (D) preferably has a high affinity with the thermoplastic resin (B). By selecting an impregnating resin having a high affinity with the thermoplastic resin (B), because the compound is efficiently compatible with the thermoplastic resin (B) during molding, the dispersibility of the carbon fibers can be further improved.

The compound (D) is preferably a resin selected from the group consisting of epoxy resins, phenolic resins, and terpene resins, and a homopolymer or a reaction product with other components can be exemplified. By impregnating the carbon fibers (CF-1) with the compound (D) in advance, because the dispersibility during molding can be efficiently improved, the compound (D) is preferably used.

The number average molecular weight of the compound (D) is preferably 200 to 5,000. If the number average molecular weight is 200 or more, the flexural strength and tensile strength of the molded article can be further improved. The number average molecular weight is more preferably 1000 or more. Further, if the number average molecular weight is 5,000 or less, because the viscosity of the compound is appropriately low, the impregnability to the carbon fibers (A-1) is excellent and the dispersibility of the carbon fibers in the molded article can be further improved. The number average molecular weight is more preferably 3,000 or less. Where, such a number average molecular weight of the compound can be determined by using gel permeation chromatography (GPC).

The amount of the compound (D) is preferably 0.1 to 20 parts by weight, more preferably 3 to 10 parts by weight, with respect to 100 parts by weight of the molding material (C-1). By controlling the amount in such a range, a molding material excellent in moldability and handleability can be obtained.

<Molding material (C-2)>

The kind of the carbon fibers (CF-2) contained in the fiber-reinforced resin molding material (C-2) containing short fiber-like carbon fibers (CF-2) and the thermoplastic resin (B) is not particularly restricted, and the carbon fibers described in the description of the carbon fibers (A) of the molded article can be exemplified.

The molding material (C-2) is obtained by melt-kneading the thermoplastic resin (B) and carbon fibers. The form of the carbon fiber raw material used during melt-kneading is not particularly restricted as long as it can be fed into a melt-kneading device, and as the form, exemplified are chopped strands that have been cut in advance, crushed fibers, continuous long fibers, etc., and chopped strands are preferably used from the viewpoint of productivity. The chopped strands may be recycled chopped strands obtained by crushing a fiber-reinforced resin molded article and pyrolyzing the matrix resin. The recycled chopped strands can be obtained by a known production method.

The fiber length of the carbon fibers (CF-2) contained in the molding material (C-2) is preferably 0.1 to 0.4 mm, and more preferably 0.2 to 0.4 mm. If the fiber length of the carbon fibers (CF-2) is less than 0.1 mm, the mechanical properties of the molded article may be insufficient. On the other hand, if the fiber length of the carbon fibers (CF-2) is 0.4 mm or more, the flowability during molding may be insufficient.

Here, the "fiber length of carbon fibers (CF-2)" contained in the molding material (C-2) in the present invention indicates the number average fiber length calculated from the following equation 4.

$$\text{Fiber length of carbon fibers (CF-2)} = \Sigma(Li)/1000 \cdots \text{(Equation 4)}$$

Li: length of each fiber (mm)

The fiber length of the carbon fibers (CF-2) can be determined by the method described in the method for determining the fiber length of carbon fibers contained in the molded article. The fiber lengths of 1,000 randomly selected carbon fibers (CF-2) are measured, and the fiber length is calculated from the above equation 4.

The fiber-reinforced resin molding material of the present invention may also contain recycled carbon fibers, similarly to in the aforementioned molded article, and it is preferred that the carbon fibers (CF-2) contain recycled carbon fibers.

Examples

The present invention will be described in more detail with reference to the following examples, but the present invention is not limited to the descriptions of these examples. First, the methods for evaluating the respective properties used in the examples will be explained.

(1) Fiber length long/short ratio of carbon fibers (A)in molded article:
A test piece cut out from a molded article was put into a solvent in which the thermoplastic resin (B) used in each Example and Comparative Example was dissolved, and a suitable heat treatment was applied to obtain a solution in which the carbon fibers (A) were uniformly dispersed. Thereafter, the solution was filtered using a quantitative filter paper (No. 5C) supplied by Advantec Co., Ltd., and the carbon fibers (A) dispersed on the filter paper were observed by an optical microscope (50 to 200 magnifications). The fiber lengths of 1,000 randomly selected carbon fibers (A) were measured, and the fiber length long/short ratio, which was expressed as the ratio of fibers having a length of 0.6 mm or more to fibers having a length of 0.1 mm or more, was calculated from the following equation 1.

$$\text{Fiber length long/short ratio} = \Sigma\,(L_{0.6})/\Sigma\,(L_{0.1}) \cdots \text{(Equation 1)}$$

$L_{0.6}$: length of fiber having a fiber length of 0.6 mm or more (mm)
$L_{0.1}$: length of fiber having a fiber length of 0.1 mm or less (mm)

(2) Short fiber percentage of carbon fibers (A) in molded article:
Carbon fibers (A) were observed by an optical microscope (50 to 200 magnifications) in the same manner as in the above-described (1). The fiber lengths of 1,000 randomly selected carbon fibers (A) were measured, and the short fiber percentage, which was expressed as the percentage of fibers having a length of 0.1 mm or less, was calculated from the following equation 2.

$$\text{Short fiber percentage} = \Sigma\,(L_{0.1})/\Sigma\,(Li) \times 100\ (\%) \cdots \text{(Equation 2)}$$

$L_{0.1}$: length of fiber having a fiber length of 0.1 mm or less (mm)
Li: fiber length of each fiber (mm)

(3) Extent of fiber length distribution of carbon fibers (A) in molded article:
The carbon fibers (A) were observed by an optical microscope (50 to 200 magnifications) in the same manner as in the above-described (1). The fiber lengths of 1,000 randomly selected carbon fibers (A) were measured, and the extent of fiber length distribution was calculated from the following equation 3.

$$\text{Extent of fiber length distribution} = (\Sigma\,(Li^2)/\Sigma\,(Li))/(\Sigma\,Li/1000) \cdots \text{(Equation 3)}$$

Li: fiber length of each fiber (mm)

**EP 4 660 220 A1**

(4) The ratio of the number of carbon fibers (A-1) and carbon fibers (A-2) having a fiber length of 0.6 mm or more in the molded article:

The carbon fibers (A) were observed by an optical microscope (50 to 200 magnifications) in the same manner as in the above-described (1). The fiber lengths of 400 randomly selected carbon fibers (A) were measured, and fibers having a fiber length of 0.6 mm or more were extracted. The extracted fibers were each measured using a laser Raman spectrophotometer, and the ratios of the maximum value of Raman scattering intensity of the carbon fiber surface appearing near a Raman shift of 1360 cm$^{-1}$ in the obtained Raman spectrum, the minimum value of Raman scattering intensity of the carbon fiber surface appearing near a Raman shift of 1480 cm$^{-1}$ , and the maximum value of Raman scattering intensity of the carbon fiber surface appearing near a Raman shift of 1580 cm$^{-1}$ were identified for carbon fibers (A-1) and carbon fibers (A-2), and the ratios of the number of fibers having a fiber length of 0.6 mm or more for carbon fibers (A-1) and carbon fibers (A-2) were calculated.

(5) Determination of Charpy impact strength of molded article:

A parallel section was cut out from an ISO dumbbell test piece obtained in each Example and Comparative Example, and a V-notched Charpy impact test was carried out in accordance with ISO 179 using a C1-4-01 type testing machine supplied by Tokyo Test Instruments Co., Ltd., to calculate the impact strength (kJ/cm$^2$). The calculated values were judged according to the following criteria, and ranks A and B were determined to be acceptable.

    A: 11 KJ/m$^2$ or more
    B: 9 KJ/m$^2$ or mor e and less than 11 KJ/m$^2$
    C: less than 9 KJ/ m$^2$

(6) Determination of flexural strength and flexural modulus of molded article:

Flexural properties with an ISO dumbbell test piece obtained by injection molding a molding material were determined according to ISO178 (1993). A three-point flexural test jig (indenter radius: 5 mm) was used to set the support distance to 64 mm, and the flexural modulus was measured under a test condition of a test speed of 2 mm/min. An "Instron (registered trademark)" universal testing machine Model 5566 (supplied by Instron Corporation) was used as the test machine. The evaluation was performed according to the following criteria, and ranks A and B were determined to be acceptable.

    Flexural strength:

        A: 410 MPa or more
        B: 380 MPa or more and less than 410 MPa
        C: 330 MPa or more and less than 380 MPa
        D: 260 MPa or more and less than 330 MPa
        E: less than 260 MPa.

    Flexural modulus:

        A: 22 GPa or more
        B: 21 GPa or more and less than 22 GPa
        C: 17 MPa or more and less than 21 GPa
        D: less than 17 MPa

(7) Determination of tensile strength of molded article:

Flexural properties with an ISO dumbbell test piece obtained by injection molding a molding material were determined according to ISO527 (1993). The flexural modulus was measured using a tensile test jig at a gripper distance set to 115 mm and a test condition of a test speed of 5 mm/min. The test machine used was an Instron (registered trademark) universal testing machine Model 5566 (supplied by Instron Corporation). The evaluation was performed according to the following criteria, and ranks A and B were determined to be acceptable.

    A: 260MPa or more
    B: 240 MPa or more and less than 260 MPa
    C: 200 MPa or more and less than 240 MPa
    D: 160 MPa or more and less than 200 MPa
    E: less than 160 MPa

(8) Fiber length in molding material (C-2):

A test piece taken out from the molding material (C-2) was put into a solvent in which the thermoplastic resin (B) used in each Example and Comparative Example was dissolved, and a heat treatment was appropriately applied to obtain a solution in which the carbon fibers (A) were uniformly dispersed. Thereafter, the solution was filtered using a quantitative filter paper (No. 5C) supplied by Advantec Co., Ltd., and the carbon fibers (CF-2) dispersed on the filter paper were observed by an optical microscope (50 to 200 magnifications). The fiber lengths of 1,000 randomly selected carbon fibers (A) were measured and the fiber length was calculated from the following equation 4.

$$\text{Fiber length of carbon fibers (CF-2)} = \Sigma \, (Li) \, / \, 1000 \cdots \text{(Equation 4)}$$

Li: length of each fiber (mm)

(9) Flowability of molding material:

The molding material was injection molded in an injection molding machine using a mold with a width of 10 mm, a length of 125 mm, and a thickness of 2 mm under the conditions of an injection speed of 30 mm/s, a back pressure of 10 MPa, a holding pressure of 40 MPa, a cylinder temperature of 260°C, and a mold temperature of 80°C to produce a molded article, and the cylinder peak pressure when molding was used as an index of flowability. The cylinder pressure was an average value of 20 shots, and this average value was used for the evaluation of each example and comparative example. The evaluation was performed according to the following criteria, and ranks A and B were determined to be acceptable.

A: less than 90 MPa
B: 90 MPa or more and less than 110 MPa
C: 110 MPa or more

Reference Example 1

Preparation of carbon fibers (CF-1)

For carbon fibers "TORAYCA" (registered trademark) T700S-24000 (total number of single fibers: 24,000, single fiber diameter: 7 $\mu$m) supplied by Toray Industries, Inc., glycerol polyglycidyl ether as a multifunctional compound was dissolved in water to a concentration of 2% by weight to prepare a sizing agent mother liquid, and the sizing agent was applied to the carbon fibers by a dipping method, followed by drying at 230°C. The amount of the sizing agent attached to the carbon fibers thus obtained was 1.0% by weight.

Reference Example 2

Preparation of carbon fibers (CF-2)-(1)

For carbon fibers "TORAYCA" (registered trademark) T700S-24000 (total number of single fibers: 24,000, single fiber diameter: 7 $\mu$m) supplied by Toray Industries, Inc., glycerol polyglycidyl ether as a multifunctional compound was dissolved in water to a concentration of 2% by weight to prepare a sizing agent mother liquid, and the sizing agent was applied to the carbon fibers by a dipping method, followed by drying at 230°C. The amount of the sizing agent attached to the carbon fibers obtained was 1.0% by weight. The carbon fibers thus obtained were cut with a cartridge cutter to obtain carbon fiber chopped yarns having a chopped length of 6 mm.

Reference Example 3

Preparation of carbon fibers (CF-2)-(2)

A prepreg P3252S-12 of carbon fibers "TORAYCA" (registered trademark) supplied by Toray Industries, Inc. (single fiber diameter: 7 $\mu$m) was pressed with a press machine at a pressure of 0.6 MPa and heated at 160°C for 2 hours to produce a carbon fiber-reinforced plastic (CFRP) molded article, which was used as a waste CFRP, and it was crushed and classified to obtain waste CFRP pieces. The waste CFRP pieces were uniformly spread on a metal bat and placed in an electric muffle furnace with an internal volume of 59 liters, and heat-treated for 3.5 hours while introducing nitrogen gas into the furnace and maintaining the treatment temperature at 500°C. Thereafter, similarly, they were heat-treated for 2 hours while introducing air into the furnace and maintaining the treatment temperature at a predetermined temperature (300°C) to obtain recycled carbon fiber chopped yarns.

Reference Example 4

Preparation of carbon fibers (CF-2)-(3)

A prepreg P2252S-12 of carbon fibers "TORAYCA" (registered trademark) supplied by Toray Industries, Inc. (single fiber diameter: 5 μm) was pressed with a press machine at a pressure of 0.6 MPa and heated at 160°C for 2 hours to produce a carbon fiber-reinforced plastic (CFRP) molded article, which was used as a waste CFRP, and it was crushed and classified to obtain waste CFRP pieces. The waste CFRP pieces were uniformly spread on a metal bat and placed in an electric muffle furnace with an internal volume of 59 liters, and heat-treated for 3.5 hours while introducing nitrogen gas into the furnace and maintaining the treatment temperature at 500°C. Thereafter, similarly, they were heat-treated for 2 hours while introducing air into the furnace and maintaining the treatment temperature at a predetermined temperature (300°C) to obtain recycled carbon fiber chopped yarns.

Reference Example 5

Preparation of carbon fibers (CF-2)-(4)

A prepreg P2252S-12 of carbon fibers "TORAYCA" (registered trademark) supplied by Toray Industries, Inc. (single fiber diameter: 5 μm) was pressed with a press machine at a pressure of 0.6 MPa and heated at 160°C for 2 hours to produce a carbon fiber-reinforced plastic (CFRP) molded article, which was used as a waste CFRP, and it was crushed and classified to obtain waste CFRP pieces. The waste CFRP pieces were uniformly spread on a metal bat and placed in an electric muffle furnace with an internal volume of 59 liters, and heat-treated for 1 hour while introducing nitrogen gas into the furnace and maintaining the treatment temperature at 400°C. Thereafter, similarly, they were heat-treated for 1 hour while introducing air into the furnace and maintaining the treatment temperature at a predetermined temperature (300°C) to obtain recycled carbon fiber chopped yarns. Some of the fibers of the obtained recycled carbon fiber chopped yarns were bound by the remaining resin of the CFRP to form a bundle.

<Thermoplastic resin (B)>

(B-1) Polyamide 6 resin (nylon 6 resin "Amilan" (registered trademark) CM1001 supplied by Toray Industries, Inc.)
(B-2) Polycarbonate resin ("Iupilon" (registered trademark) S-3000 supplied by Mitsubishi Engineering Plastics Corporation)
(B-3) Polypropylene resin ("Prime Polypro" (registered trademark) J137G supplied by Prime Polymer Co., Ltd.)/maleic acid modified polypropylene resin ("Admer" (registered trademark) QE840 supplied by Mitsui Chemicals, Inc.) was blended at a weight ratio of 90/10.

<Compound (D)>

(D-1) Terpene phenol resin ("YS Polystar N125", supplied by Yasuhara Chemical Co., Ltd.)
(D-2) Bisphenol A type epoxy resin ("jER" (registered trademark) 1004AF, supplied by Mitsubishi Chemical Corporation)
(D-3) Hydrogenated terpene resin ("Clearon" (registered trademark) P125, supplied by Yasuhara Chemical Co., Ltd.) was used.

(Example 1)

A long fiber-reinforced resin pellet manufacturing device was used, in which a coating die for a wire resin coating method was installed at the tip of a TEX-30α type twin screw extruder (screw diameter: 30 mm, L/D = 32) supplied by Japan Steel Works, Ltd., the extruder cylinder temperature was set at 230°C, the above-described thermoplastic resin (B-1) was fed from the main hopper and melt-kneaded at a screw rotation speed of 200 rpm. The compound (D-1) heated and melted at 250°C was discharged at an amount of 6 parts by weight with respect to 100 parts by weight of the total of the carbon fibers (CF-1) and the thermoplastic resin (B-1). Thereafter, the compound (D-1) was discharged and impregnated into a fiber bundle comprising carbon fibers (CF-1), and then the fiber bundle of carbon fibers (CF-1) to which the compound (D-1) was applied was supplied to a die hole (diameter: 3 mm) discharging the molten thermoplastic resin (B-1), and the carbon fibers (CF-1) were continuously arranged so that the periphery of the carbon fibers (CF-1) was covered with the thermoplastic resin (B). In the internal cross section of the fiber bundle at this time, at least a part of the carbon fibers (CF-1) were in contact with the thermoplastic resin (B-1). After cooling the obtained strand, it was cut with a cutter at a pellet length of 7 mm to obtain fiber-reinforced resin molding material (C-1)-(1). At this time, the take-up speed was adjusted so that the amount of the carbon fibers (CF-1) became 30 parts by weight with respect to the total of 100 parts by weight of (CF-1) and (B-1). The length of the carbon fibers (CF-1) in the obtained fiber-reinforced resin molding material (C-1)-(1) was substantially the same as the length of the pellet, and the bundles of carbon fibers were aligned parallel to the axial direction of the molding material.

Next, after feeding thermoplastic resin (B-1) to the main hopper of another twin-screw extruder (TEX30α supplied by Japan Steel Works, Ltd.), carbon fibers (CF-2)-(1) were fed from a side feeder into the molten resin, and the screw rotation speed was set to 200 rpm. The strand discharged from the die was cooled in water, cut at a length of 3.0 mm by a strand cutter, and pelletized to obtain fiber-reinforced resin molding material (C-2)-(1). At this time, the amount of the supplied carbon fibers (CF-2)-(1) was controlled so that the amount of carbon fibers (CF-2)-(1) became 30 parts by weight with respect to the total of 100 parts by weight of (CF-2)-(1) and (B-1).

The fiber-reinforced resin molding materials (C-1)-(1) and (C-2)-(1) thus obtained were dry-blended in the ratio shown in Table 1 to obtain a fiber-reinforced resin molding material (C) as an intermediate raw material. The fiber-reinforced resin molding material (C) thus obtained was injection-molded using an injection molding machine (J110AD supplied by Japan Steel Works, Ltd.) under the conditions of an injection speed: 30 mm/s, a back pressure: 10 MPa, a holding pressure: 40 MPa, a holding time: 10 seconds, a cylinder temperature: 260°C, and a mold temperature: 80°C to produce an ISO dumbbell test piece as a molded article, and the cylinder peak pressure when molding at a condition of 10 mm width x 125 mm x 2 mm thickness was measured. The composition ratios of carbon fibers (CF-1), carbon fibers (CF-2), thermoplastic resin (B-1), and compound (D) in Table 1 were controlled by the ratios of dry blending. Here, the cylinder temperature indicates a temperature of the part of the injection molding machine where the molding material is heated and melted, and the mold temperature indicates a temperature of the mold into which the resin is injected to form a predetermined shape. The obtained test pieces (molded article) were left to stand for 24 hours in a constant temperature and humidity room controlled at a temperature of 23°C and a relative humidity of 50%, and then subjected to evaluation of properties. The evaluation results evaluated by the aforementioned methods are summarized and shown in Table 1.

(Examples 2 to 11, Comparative Examples 1 to 6)

Materials and molded articles were obtained in the same manner as in the above-described Example 1, except that the ratios of respective components were as shown in Tables 1 to 3.

(Example 12)

A long fiber-reinforced resin pellet manufacturing device was used, in which a coating die for a wire resin coating method was installed at the tip of a TEX-30α type twin screw extruder (screw diameter: 30 mm, L/D = 32) supplied by Japan Steel Works, Ltd., the extruder cylinder temperature was set at 300°C, the above-described thermoplastic resin (B-2) was fed from the main hopper and melt-kneaded at a screw rotation speed of 200 rpm. The compound (D-2) heated and melted at 250°C was discharged at an amount of 6 parts by weight with respect to 100 parts by weight of the total of the carbon fibers (CF-1) and the thermoplastic resin (B-2). Thereafter, the compound (D-2) was discharged and impregnated into a fiber bundle comprising carbon fibers (CF-1), and then the fiber bundle of carbon fibers (CF-1) to which the compound (D-2) was applied was supplied to a die hole (diameter: 3 mm) discharging the molten thermoplastic resin (B-2), and the carbon fibers (CF-1) were continuously arranged so that the periphery of the carbon fibers (CF-1) was covered with the thermoplastic resin (B-2). In the internal cross section of the fiber bundle at this time, at least a part of the carbon fibers (CF-1) were in contact with the thermoplastic resin (B-2). After cooling the obtained strand, it was cut with a cutter at a pellet length of 7 mm to obtain fiber-reinforced resin molding material (C-1)-(2). At this time, the take-up speed was adjusted so that the amount of the carbon fibers (CF-1) became 30 parts by weight with respect to the total of 100 parts by weight of (CF-1) and (B-2). The length of the carbon fibers (CF-1) in the obtained fiber-reinforced resin molding material (C-1)-(2) was substantially the same as the length of the pellet, and the bundles of carbon fibers were aligned parallel to the axial direction of the molding material.

Next, after feeding thermoplastic resin (B-2) to the main hopper of another twin-screw extruder (TEX30α supplied by Japan Steel Works, Ltd.), carbon fibers (CF-2)-(3) were fed from a side feeder into the molten resin, and the screw rotation speed was set to 200 rpm. The strand discharged from the die was cooled in water, cut at a length of 3.0 mm by a strand cutter, and pelletized to obtain fiber-reinforced resin molding material (C-2)-(2). At this time, the amount of the supplied carbon fibers (CF-2)-(3) was controlled so that the amount of carbon fibers (CF-2)-(3) became 30 parts by weight with respect to the total of 100 parts by weight of (CF-2)-(3) and (B-2).

The fiber-reinforced resin molding materials (C-1) and (C-2) thus obtained were dry-blended in the ratio shown in Table 4 to obtain a fiber-reinforced resin molding material (C) as an intermediate raw material. The fiber-reinforced resin molding material (C) thus obtained was injection-molded using an injection molding machine (J110AD supplied by Japan Steel Works, Ltd.) under the conditions of an injection speed: 30 mm/s, a back pressure: 10 MPa, a holding pressure: 40 MPa, a holding time: 10 seconds, a cylinder temperature: 300°C, and a mold temperature: 80°C to produce an ISO dumbbell test piece as a molded article, and the cylinder peak pressure when molding at a condition of 10 mm width x 125 mm x 2 mm thickness was measured. The composition ratios of carbon fibers (CF-1), carbon fibers (CF-2), thermoplastic resin (B), and compound (D) in Table 4 were controlled by the ratios of dry blending. Here, the cylinder temperature indicates a temperature of the part of the injection molding machine where the molding material is heated and melted, and the mold temperature indicates a temperature of the mold into which the resin is injected to form a predetermined shape. The obtained test pieces (molded article) were left to stand for 24 hours in a constant temperature and humidity room controlled at a temperature of 23°C and a relative humidity of 50%, and then subjected to evaluation of properties. The evaluation results evaluated by the aforementioned methods are summarized and shown in Table 4.

(Comparative Example 7)

The material and molded article were obtained in the same manner as in the above-described Example 12, except that the ratios of the respective components were as shown in Table 4.

(Example 13)

A long fiber-reinforced resin pellet manufacturing device was used, in which a coating die for a wire resin coating method was installed at the tip of a TEX-30$\alpha$ type twin screw extruder (screw diameter: 30 mm, L/D = 32) supplied by Japan Steel Works, Ltd., the extruder cylinder temperature was set at 220°C, the above-described thermoplastic resin (B-3) was fed from the main hopper and melt-kneaded at a screw rotation speed of 200 rpm. The compound (D-3) heated and melted at 200°C was discharged at an amount of 6 parts by weight with respect to 100 parts by weight of the total of the carbon fibers (CF-1) and the thermoplastic resin (B-3). Thereafter, the compound (D-3) was discharged and impregnated into a fiber bundle comprising carbon fibers (CF-1), and then the fiber bundle of carbon fibers (CF-1) to which the compound (D-3) was applied was supplied to a die hole (diameter: 3 mm) discharging the molten thermoplastic resin (B-3), and the carbon fibers (CF-1) were continuously arranged so that the periphery of the carbon fibers (CF-1) was covered with the thermoplastic resin (B-3). In the internal cross section of the fiber bundle at this time, at least a part of the carbon fibers (CF-1) were in contact with the thermoplastic resin (B-3). After cooling the obtained strand, it was cut with a cutter at a pellet length of 7 mm to obtain fiber-reinforced resin molding material (C-1)-(3). At this time, the take-up speed was adjusted so that the amount of the carbon fibers (CF-1) became 30 parts by weight with respect to the total of 100 parts by weight of (CF-1) and (B-3). The length of the carbon fibers (CF-1) in the obtained fiber-reinforced resin molding material (C-1)-(3) was substantially the same as the length of the pellet, and the bundles of carbon fibers were aligned parallel to the axial direction of the molding material.

Next, after feeding thermoplastic resin (B-3) to the main hopper of another twin-screw extruder (TEX30$\alpha$ supplied by Japan Steel Works, Ltd.), carbon fibers (CF-2)-(3) were fed from a side feeder into the molten resin, and the screw rotation speed was set to 200 rpm. The strand discharged from the die was cooled in water, cut at a length of 3.0 mm by a strand cutter, and pelletized to obtain fiber-reinforced resin molding material (C-2)-(3). At this time, the amount of the supplied carbon fibers (CF-2)-(3) was controlled so that the amount of carbon fibers (CF-2)-(3) became 30 parts by weight with respect to the total of 100 parts by weight of (CF-2)-(3) and (B-3).

The fiber-reinforced resin molding materials (C-1) and (C-2) thus obtained were dry-blended in the ratio shown in Table 4 to obtain a fiber-reinforced resin molding material (C) as an intermediate raw material. The fiber-reinforced resin molding material (C) thus obtained was injection-molded using an injection molding machine (J110AD supplied by Japan Steel Works, Ltd.) under the conditions of an injection speed: 30 mm/s, a back pressure: 10 MPa, a holding pressure: 40 MPa, a holding time: 10 seconds, a cylinder temperature: 230°C, and a mold temperature: 60°C to produce an ISO dumbbell test piece as a molded article, and the cylinder peak pressure when molding at a condition of 10 mm width x 125 mm x 2 mm thickness was measured. The composition ratios of carbon fibers (A-1), carbon fibers (A-2), thermoplastic resin (B), and compound (D) in Table 1 were controlled by the ratios of dry blending. Here, the cylinder temperature indicates a temperature of the part of the injection molding machine where the molding material is heated and melted, and the mold temperature indicates a temperature of the mold into which the resin is injected to form a predetermined shape. The obtained test pieces (molded article) were left to stand for 24 hours in a constant temperature and humidity room controlled at a temperature of 23°C and a relative humidity of 50%, and then subjected to evaluation of properties. The evaluation results evaluated by the aforementioned methods are summarized and shown in Table 4.

(Comparative Example 8)

The material and molded article were obtained in the same manner as in the above-described Example 13, except that the ratios of the respective components were as shown in Table 4.

[Table 1]

| | | | | Example 1 | Example 2 | Example 3 | Example 4 | Example 5 |
|---|---|---|---|---|---|---|---|---|
| Fiber-reinforced resin molding material (C-1) | Carbon fiber (CF-1) | Kind | - | (CF-1) | (CF-1) | (CF-1) | (CF-1) | (CF-1) |
| | | Part by weight | - | 30 | 30 | 30 | 30 | 30 |
| | | Fiber diameter | μm | 7 | 7 | 7 | 7 | 7 |
| | | Fiber length | mm | 7 | 7 | 7 | 7 | 7 |
| | | Form | - | bundles | bundles | bundles | bundles | bundles |
| | Thermoplastic resin (B) | Kind | - | (B-1) | (B-1) | (B-1) | (B-1) | (B-1) |
| | | Part by weight | - | 70 | 70 | 70 | 70 | 70 |
| | Compound (D) | Kind | - | (D-1) | (D-1) | (D-1) | (D-1) | (D-1) |
| | | Part by weight | - | 6 | 6 | 6 | 6 | 6 |
| Fiber-reinforced resin molding material (C-2) | Carbon fiber (CF-2) | Kind | - | (CF-2)-(1) | (CF-2)-(1) | (CF-2)-(2) | (CF-2)-(3) | (CF-2)-(3) |
| | | Part by weight | - | 30 | 30 | 30 | 30 | 30 |
| | | Fiber diameter | μm | 7 | 7 | 7 | 5 | 5 |
| | | Fiber length | mm | 0.22 | 0.22 | 0.21 | 0.20 | 0.20 |
| | | Form | - | single fibers | single fibers | single fibers | single fibers | single fibers |
| | Thermoplastic resin (B) | Kind | - | (B-1) | (B-1) | (B-1) | (B-1) | (B-1) |
| | | Part by weight | - | 70 | 70 | 70 | 70 | 70 |

(continued)

| | | | | Example 1 | Example 2 | Example 3 | Example 4 | Example 5 |
|---|---|---|---|---|---|---|---|---|
| Fiber-reinforced resin molding material (C) | | Molding material (C-1) | Blending rate | % | 90 | 70 | 70 | 90 | 70 |
| | | Molding material (C-2) | Blending rate | % | 10 | 30 | 30 | 10 | 30 |
| | | Carbon fiber (A) | Recycling rate | % | 0 | 0 | 30 | 10 | 30 |
| | | | Part by weight | - | 30 | 30 | 30 | 30 | 30 |
| | | | Ratio of fiber diameters | - | 1 | 1 | 1 | 1.4 | 1.4 |
| | | Thermoplastic resin (B) | Part by weight | - | 70 | 70 | 70 | 70 | 70 |
| | | | - | - | B | A | B | B | B |
| Molded article | | Fiber length long/short ratio of carbon fibers (A) | | - | 2.9 | 7.4 | 6.1 | 10.6 | 6.8 |
| | | Short fiber percentage of carbon fibers (A) | | % | 6 | 3 | 3 | 4 | 5 |
| | | Extent of fiber length distribution of carbon fibers (A) | | - | 1.8 | 1.7 | 1.6 | 2.4 | 2.4 |
| | | Ratio of number of fibers having 0.6 mm or more of carbon fibers (A) (A-1) : (A-2) | | - | identification of (A-1) and (A-2): impossible | identification of (A-1) and (A-2): impossible | 100:0 | 100:0 | 100:0 |
| | | Ratio of fiber diameters $\varphi$ (A-1)/$\varphi$(A-2) | | - | identification of (A-1) and (A-2): impossible | identification of (A-1) and (A-2): impossible | 1 | 1.4 | 1.4 |
| | | Charpy impact strength | | - | A | A | B | A | A |
| | | Flexural strength | | - | A | B | B | A | A |
| | | Flexural modulus | | - | A | A | A | A | A |
| | | Tensile strength | | - | A | B | B | A | A |

[Table 2]

| | | | | Example 6 | Example 7 | Example 8 | Example 9 | Example 10 | Example 11 |
|---|---|---|---|---|---|---|---|---|---|
| Fiber-reinforced resin molding material (C-1) | Carbon fiber (CF-1) | Kind | - | (CF-1) | (CF-1) | (CF-1) | (CF-1) | (CF-1) | (CF-1) |
| | | Part by weight | - | 30 | 30 | 30 | 30 | 30 | 30 |
| | | Fiber diameter | μm | 7 | 7 | 7 | 7 | 7 | 7 |
| | | Fiber length | mm | 7 | 7 | 7 | 7 | 7 | 7 |
| | | Form | - | bundles | bundles | bundles | bundles | bundles | bundles |
| | Thermoplastic resin (B) | Kind | - | (B-1) | (B-1) | (B-1) | (B-1) | (B-1) | (B-1) |
| | | Part by weight | - | 70 | 70 | 70 | 70 | 70 | 70 |
| | Compound (D) | Kind | - | (D-1) | (D-1) | (D-1) | (D-1) | (D-1) | (D-1) |
| | | Part by weight | - | 6 | 6 | 6 | 6 | 6 | 6 |
| Fiber-reinforced resin molding material (C-2) | Carbon fiber (CF-2) | Kind | - | (CF-2) - (3) | (CF-2) - (3) | (CF-2) -(4) | (CF-2) - (4) | (CF-2) -(4) | (CF-2) -(4) |
| | | Part by weight | - | 30 | 30 | 30 | 30 | 30 | 30 |
| | | Fiber diameter | μm | 5 | 5 | 5 | 5 | 5 | 5 |
| | | Fiber length | min | 0.20 | 0.20 | 0.21 | 0.21 | 0.21 | 0.21 |
| | | Form | - | single fibers | single fibers | a part: bundles | a part: bundles | a part: bundles | a part: bundles |
| | Thermoplastic resin (B) | Kind | - | (B-1) | (B-1) | (B-1) | (B-1) | (B-1) | (B-1) |
| | | Part by weight | - | 70 | 70 | 70 | 70 | 70 | 70 |
| Fiber-reinforced resin molding material (C) | Molding material (C-1) | Blending rate | % | 50 | 30 | 90 | 70 | 50 | 30 |
| | Molding material (C-2) | Blending rate | % | 50 | 70 | 10 | 30 | 50 | 70 |
| | Carbon fiber (A) | Recycling rate | % | 50 | 70 | 10 | 30 | 50 | 70 |
| | | Part by weight | - | 30 | 30 | 30 | 30 | 30 | 30 |
| | | Ratio of fiber diameters | - | 1.4 | 1.4 | 1.4 | 1.4 | 1.4 | 1.4 |
| | Thermoplastic resin (B) | Part by weight | - | 70 | 70 | 70 | 70 | 70 | 70 |
| | | - | - | B | A | B | B | B | A |

(continued)

| | | | Example 6 | Example 7 | Example 8 | Example 9 | Example 10 | Example 11 |
|---|---|---|---|---|---|---|---|---|
| Molded article | Fiber length long/short ratio of carbon fibers (A) | - | 6.4 | 4.5 | 10.9 | 10.6 | 4.1 | 6.1 |
| | Short fiber percentage of carbon fibers (A) | % | 6 | 4 | 3 | 3 | 7 | 3 |
| | Extent of fiber length distribution of carbon fibers (A) | - | 2.3 | 2.2 | 2.3 | 2.3 | 1.7 | 1.4 |
| | Ratio of number of fibers having 0.6 mm or more of carbon fibers (A) (A-1) : (A-2) | - | 100:0 | 100:0 | 100:0 | 100:0 | 100:0 | 100:0 |
| | Ratio of fiber diameters $\varphi$ (A-1)/$\varphi$(A-2) | - | 1.4 | 1.4 | 1.4 | 1.4 | 1.4 | 1.4 |
| | Charpy impact strength | - | A | A | A | A | A | B |
| | Flexural strength | - | A | A | A | B | B | B |
| | Flexural modulus | - | A | A | A | B | A | A |
| | Tensile strength | - | A | A | A | B | B | B |

[Table 3]

| | | | - | Comparative Example 1 | Comparative Example 2 | Comparative Example 3 | Comparative Example 4 | Comparative Example 5 | Comparative Example 6 |
|---|---|---|---|---|---|---|---|---|---|
| Fiber-reinforced resin molding material (C-1) | Carbon fiber (CF-1) | Kind | - | (CF-1) | (CF-1) | (CF-1) | - | - | (CF-1) |
| | | Part by weight | - | 30 | 30 | 30 | - | - | 30 |
| | | Fiber diameter | μm | 7 | 7 | 7 | - | - | 7 |
| | | Fiber length | mm | 7 | 7 | 7 | - | - | 7 |
| | | Form | - | bundles | bundles | bundles | - | - | bundles |
| | Thermoplastic resin (B) | Kind | - | (B-1) | (B-1) | (B-1) | - | - | (B-1) |
| | | Part by weight | - | 70 | 70 | 70 | - | - | 70 |
| | Compound (D) | Kind | - | (D-1) | (D-1) | (D-1) | - | - | (D-1) |
| | | Part by weight | - | 6 | 6 | 6 | - | - | 6 |
| Fiber-reinforced resin molding material (C-2) | Carbon fiber (CF-2) | Kind | - | (CF-2)-(1) | (CF-2)-(3) | (CF-2)-(4) | (CF-2)-(3) | (CF-2)-(1) | - |
| | | Part by weight | - | 30 | 30 | 30 | 30 | 30 | - |
| | | Fiber diameter | μm | 7 | 5 | 5 | 5 | 7 | - |
| | | Fiber length | mm | 0.22 | 0.20 | 0.21 | 0.20 | 0.22 | - |
| | | Form | - | single fibers | single fibers | a part: bundles | single fibers | single fibers | - |
| | Thermoplastic resin (B) | Kind | - | (B-1) | (B-1) | (B-1) | (B-1) | (B-1) | - |
| | | Part by weight | - | 70 | 70 | 70 | 70 | 70 | - |

(continued)

| | | | | Comparative Example 1 | Comparative Example 2 | Comparative Example 3 | Comparative Example 4 | Comparative Example 5 | Comparative Example 6 |
|---|---|---|---|---|---|---|---|---|---|
| Fiber-reinforced resin molding material (C) | Molding material (C-1) | Blending rate | % | 50 | 10 | 10 | - | - | 100 |
| | Molding material (C-2) | Blending rate | % | 50 | 90 | 90 | 100 | 100 | - |
| | Carbon fiber (A) | Recycling rate | % | 0 | 90 | 90 | 100 | 0 | 0 |
| | | Part by weight | - | 30 | 30 | 30 | 30 | 30 | 30 |
| | | Ratio of fiber diameters | - | 1 | 1.4 | 1.4 | - | - | - |
| | Thermoplastic resin (B) | Part by weight | - | 70 | 70 | 70 | 70 | 70 | 70 |
| | | - | - | A | A | A | A | A | C |
| Molded article | Fiber length long/short ratio of carbon fibers (A) | | - | 0.5 | 1.9 | 1.9 | 0.0 | 0.0 | 26.3 |
| | Short fiber percentage of carbon fibers (A) | | % | 21 | 4 | 4 | 18 | 16 | 0 |
| | Extent of fiber length distribution of carbon fibers (A) | | - | 2.2 | 1.5 | 1.4 | 1.3 | 1.3 | 2.5 |
| | Ratio of number of fibers having 0.6 mm or more of carbon fibers (A) (A-1) : (A-2) | | - | identification of (A-1) and (A-2): impossible | 100:0 | 100:0 | identification of (A-1) and (A-2): impossible | identification of (A-1) and (A-2): impossible | identification of (A-1) and (A-2): impossible |
| | Ratio of fiber diameters $\varphi(A-1)/\varphi(A-2)$ | | - | identification of (A-1) and (A-2): impossible | 1.4 | 1.4 | identification of (A-1) and (A-2): impossible | identification of (A-1) and (A-2): impossible | identification of (A-I) and (A-2): impossible |
| | Charpy impact strength | | - | B | C | C | c | c | A |
| | Flexural strength | | - | C | D | D | D | D | A |
| | Flexural modulus | | - | B | C | C | B | B | A |
| | Tensile strength | | - | B | C | C | C | c | A |

[Table 4]

| | | | | Example 12 | Comparative Example 7 | Example 13 | Comparative Example 8 |
|---|---|---|---|---|---|---|---|
| Fiber-reinforced resin molding material (C-1) | Carbon fiber (CF-1) | Kind | - | (CF-1) | - | (CF-1) | - |
| | | Part by weight | - | 30 | - | 30 | - |
| | | Fiber diameter | μm | 7 | - | 7 | - |
| | | Fiber length | mm | 7 | - | 7 | - |
| | | Form | - | 束 | - | 束 | - |
| | Thermoplastic resin (B) | Kind | - | (B-2) | - | (B-3) | - |
| | | Part by weight | - | 70 | - | 70 | - |
| | Compound (D) | Kind | - | (D-2) | - | (D-3) | - |
| | | Part by weight | - | 6 | - | 6 | - |
| Fiber-reinforced resin molding material (C-2) | Carbon fiber (CF-2) | Kind | - | (CF-2) - (3) | (CF-2) -(3) | (CF-2) -(3) | (CF-2) - (3) |
| | | Part by weight | - | 30 | 30 | 30 | 30 |
| | | Fiber diameter | μm | 5 | 5 | 5 | 5 |
| | | Fiber length | mm | 0.2 | 0.2 | 0.2 | 0.2 |
| | | Form | - | single fibers | single fibers | single fibers | single fibers |
| | Thermoplastic resin (B) | Kind | - | (B-2) | (B-2) | (B-3) | (B-2) |
| | | Part by weight | - | 70 | 70 | 70 | 70 |
| Fiber-reinforced resin molding material (C) | Molding material (C-1) | Blending rate | % | 70 | - | 70 | - |
| | Molding material (C-2) | Blending rate | % | 30 | 100 | 30 | 100 |
| | Carbon fiber (A) | Recycling rate | % | 30 | 100 | 30 | 100 |
| | | Part by weight | - | 30 | 30 | 30 | 30 |
| | | Ratio of fiber diameters | - | 1.4 | - | 1.4 | - |
| | Thermoplastic resin (B) | Part by weight | - | 70 | 70 | 70 | 70 |
| | | - | - | B | A | A | A |
| | Fiber length long/short ratio of carbon fibers (A) | | - | 4.7 | 0.0 | 8 | 0.0 |

(continued)

|  |  |  | | Example 12 | Comparative Example 7 | Example 13 | Comparative Example 8 |
|---|---|---|---|---|---|---|---|
| Molded article | | Short fiber percentage of carbon fibers (A) | % | 5 | 19 | 2 | 17 |
| | | Extent of fiber length distribution of carbon fibers (A) | - | 2.2 | 1.3 | 2.8 | 1.3 |
| | | Ratio of number of fibers having 0.6 mm or more of carbon fibers (A) (A-1) : (A-2) | - | 100:0 | identification of (A-1) and (A-2): impossible | 100:0 | identification of (A-1) and (A-2): impossible |
| | | Ratio of fiber diameters φ (A-1)/φ(A-2) | - | 1.4 | identification of (A-1) and (A-2): impossible | 1.4 | identification of (A-1) and (A-2): impossible |
| | | Charpy impact strength | - | B | C | A | C |
| | | Flexural strength | - | D | E | D | E |
| | | Flexural modulus | - | C | D | C | D |
| | | Tensile strength | - | D | E | D | E |

Examples 1 and 2 were excellent in mechanical properties and flowability, while Example 3, which used chopped recycled carbon fibers, showed slightly inferior mechanical properties as compared with Example 2, but still showed excellent mechanical properties. Examples 4 to 7 showed similarly excellent mechanical properties and flowability even when the fiber kind was changed, and showed similar mechanical properties even when the amount of chopped recycled carbon fiber yarns was increased as compared with Examples 1 to 3. Examples 8 to 11 showed slightly inferior but excellent mechanical properties and flowability as compared with Examples 4 to 7. Examples 12 and 13 showed slightly inferior but excellent mechanical properties and flowability as compared with Example 5, even when the resin kind was changed.

On the other hand, in Comparative Example 1, the long/short ratio of carbon fibers (A) in the molded article was small, and the flexural strength was poor. This is because the ratio of the fiber diameters of carbon fibers (CF-1) and carbon fibers (CF-2) in the molding material (C) was small, and the short fiber percentage increased due to fiber breakage during molding. Similarly, in Comparative Example 2 and Comparative Example 3, the long/short ratio of carbon fibers (A) in the molded article was small, and the mechanical properties were poor. This is because the ratio of carbon fibers (A-2) in carbon fibers (A) was high, and the ratio of carbon fibers (A-1) having a long fiber length was low. In Comparative Example 4 and Comparative Example 5, since the molding material (C-1) was not contained, the carbon fibers in the molded article were short, and the mechanical properties were poor. In Comparative Example 6, since the molding material (C-2) was not contained, the number of short carbon fibers in the molded article was small, and the flowability was poor. In Comparative Example 7 and Comparative Example 8, since the molding material (C-1) was not contained, the carbon fibers in the molded article were short, and the mechanical properties were poor.

Claims

1. A fiber-reinforced resin molded article containing carbon fibers (A) and a thermoplastic resin (B), **characterized in that** the carbon fibers (A) are contained at an amount of 5-40 parts by weight with respect to a total of 100 parts by weight of the carbon fibers (A) and the thermoplastic resin (B), and the carbon fibers (A) are such that 1,000 carbon fibers (A) randomly selected from a molded article have a fiber length long/short ratio, determined by the following equation 1, of 2 or more and 20 or less.

$$\text{Fiber length long/short ratio} = \Sigma\,(L_{0.6})/\Sigma\,(L_{0.1})\ \cdots\ (\text{Equation 1})$$

$L_{0.6}$: length of fiber having a fiber length of 0.6 mm or more (mm)
$L_{0.1}$: length of fiber having a fiber length of 0.1 mm or less (mm)

2. The fiber-reinforced resin molded article according to claim 1, wherein 1,000 carbon fibers (A) randomly selected from a molded article have a short fiber percentage, determined by the following equation 2, of 15% or less.

$$\text{Short fiber percentage} = \Sigma\,(L_{0.1})/\Sigma\,(Li) \times 100\ (\%)\ \cdots\ (\text{Equation 2})$$

    $L_{0.1}$: length of fiber having a fiber length of 0.1 mm or less (mm)
    $Li$: fiber length of each fiber (mm)

3. The fiber-reinforced resin molded article according to claim 1, wherein 1,000 carbon fibers (A) randomly selected from a molded article have an extent of fiber length distribution, determined by the following equation 3, of 1.4 or more.

$$\text{Extent of fiber length distribution} = (\Sigma\,(Li^2)/\Sigma\,(Li))/(\Sigma\,Li/1000)\ \cdots\ (\text{Equation 3})$$

    $Li$: fiber length of each fiber (mm)

4. The fiber-reinforced resin molded article according to claim 1, wherein the carbon fibers (A) contain recycled carbon fibers.

5. The fiber-reinforced resin molded article according to claim 1, wherein the carbon fibers (A) contained in the fiber-reinforced resin molded article include two kinds of carbon fibers (A-1) and carbon fibers (A-2) different from each other in ratios of $I_{1360}/I_{1580}$ and $I_{1480}/I_{1580}$ determined as ratios of a maximum value $I_{1360}$ of Raman scattering intensity of the carbon fiber surface appearing in the vicinity of a Raman shift of 1360 cm$^{-1}$, a minimum value $I_{1480}$ of Raman scattering intensity of the carbon fiber surface appearing in the vicinity of a Raman shift of 1480 cm$^{-1}$, and a maximum value $I_{1580}$ of Raman scattering intensity of the carbon fiber surface appearing in the vicinity of a Raman shift of 1580 cm$^{-1}$, and the carbon fibers (A-2) have a larger value of $I_{1360}/I_{1580}$ or the same value and a smaller value of $I_{1480}/I_{1580}$ as compared with the carbon fibers (A-1).

6. The fiber-reinforced resin molded article according to claim 5, wherein, among the carbon fibers (A) contained in the fiber-reinforced resin molded article, in fibers having a fiber length of 0.6 mm or more, a number ratio of the carbon fibers (A-1) to the carbon fibers (A-2), that is a ratio of the number of (A-1) having 0.6 mm or more to the number of (A-2) having 0.6 mm or more, is 100:0 to 50:50.

7. The fiber-reinforced resin molded article according to claim 5, wherein the carbon fibers (A-2) are contained at an amount of 10 to 70 parts by weight with respect to 100 parts by weight of the carbon fibers (A).

8. The fiber-reinforced resin molded article according to claim 5, wherein a ratio of a fiber diameter $\varphi$(A-1) of the carbon fibers (A-1) to a fiber diameter $\varphi$(A-2) of the carbon fibers (A-2), $\varphi$(A-1)/$\varphi$(A-2), is 1.2 or more and 2.0 or less.

9. A fiber-reinforced resin molding material which is a fiber-reinforced resin molding material (C) containing carbon fibers (A) and a thermoplastic resin (B), **characterized in that** the fiber-reinforced resin molding material (C) contains a fiber-reinforced resin molding material (C-1) containing carbon fibers (CF-1), which have a fiber length of 3 mm or more and 10 mm or less and which are oriented in a longitudinal direction of the molding material, and the thermoplastic resin (B), and a fiber-reinforced resin molding material (C-2) containing short fiber-like carbon fibers (CF-2) and the thermoplastic resin (B), and a ratio of a fiber diameter $\varphi$(CF-1) of the carbon fibers (CF-1) to a fiber diameter $\varphi$(CF-2) of the carbon fibers (CF-2), $\varphi$(CF-1)/$\varphi$(CF-2), is 1.2 or more and 2.0 or less.

10. The fiber-reinforced resin molding material according to claim 9, wherein the carbon fibers (CF-2) are such that 1,000 carbon fibers (CF-2) randomly selected from the fiber-reinforced resin molding material (C-2) have a fiber length, determined by the following equation 4, of0.1 mm or more and 0.4 mm or less.

$$\text{Fiber length of carbon fibers (CF-2)} = \Sigma\,(Li)\,/\,1000 \cdots\ (\text{Equation 4})$$

    $Li$: length of each fiber (mm)

11. The fiber-reinforced resin molding material according to claim 9, wherein the fiber-reinforced resin molding material (C-1) contains a compound (D) different from the thermoplastic resin (B), that exists in a state of filling spaces between the carbon fibers (CF-1), in addition to the carbon fibers (CF-1) and the thermoplastic resin (B).

12. The fiber-reinforced resin molding material according to claim 9, wherein the carbon fibers (CF-2) contain recycled carbon fibers.

## INTERNATIONAL SEARCH REPORT

| International application No. |
| --- |
| **PCT/JP2023/041424** |

**A. CLASSIFICATION OF SUBJECT MATTER**

*C08J 5/04*(2006.01)i
FI: C08J5/04 CEZ

According to International Patent Classification (IPC) or to both national classification and IPC

**B. FIELDS SEARCHED**

Minimum documentation searched (classification system followed by classification symbols)

B29B11/16;15/08-15/14; C08J5/00-5/24; C08K3/00-13/08; C08L1/00-101/14; B29C45/00-45/84; B29C48/00-48/96; B29C70/00-70/88

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 9-314558 A (TORAY INDUSTRIES, INC.) 09 December 1997 (1997-12-09)<br>entire document, particularly, claims, paragraphs [0021]-[0022], fig. 2 | 1, 2 |
| A | JP 2021-091745 A (TEIJIN LIMITED) 17 June 2021 (2021-06-17)<br>entire document, particularly, claims, paragraph [0019] | 1-12 |
| A | JP 2006-028313 A (MITSUBISHI CORP.) 02 February 2006 (2006-02-02)<br>entire document, particularly, claims | 1-12 |
| A | JP 2006-182948 A (MATSUSHITA ELECTRIC WORKS, LTD.) 13 July 2006 (2006-07-13)<br>entire document, particularly, claims | 1-12 |
| A | JP 2002-231051 A (TORAY INDUSTRIES, INC.) 16 August 2002 (2002-08-16)<br>entire document, particularly, claims | 1-12 |
| A | JP 2001-207068 A (TORAY INDUSTRIES, INC.) 31 July 2001 (2001-07-31)<br>entire document, particularly, claims | 1-12 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 January 2024** | **30 January 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

EP 4 660 220 A1

## INTERNATIONAL SEARCH REPORT

International application No.

**PCT/JP2023/041424**

### C. DOCUMENTS CONSIDERED TO BE RELEVANT

| Category* | Citation of document, with indication, where appropriate, of the relevant passages | Relevant to claim No. |
|---|---|---|
| A | US 6384128 B1 (TORAY INDUSTRIES, INC.) 07 May 2002 (2002-05-07) entire document, particularly, claims | 1-12 |
| E, A | JP 7401029 B1 (TORAY INDUSTRIES, INC.) 19 December 2023 (2023-12-19) entire document, particularly, claims | 1-12 |

Form PCT/ISA/210 (second sheet) (July 2022)

**INTERNATIONAL SEARCH REPORT**
Information on patent family members

International application No.

**PCT/JP2023/041424**

| Patent document cited in search report | | | Publication date (day/month/year) | Patent family member(s) | Publication date (day/month/year) |
|---|---|---|---|---|---|
| JP | 9-314558 | A | 09 December 1997 | (Family: none) | |
| JP | 2021-091745 | A | 17 June 2021 | (Family: none) | |
| JP | 2006-028313 | A | 02 February 2006 | (Family: none) | |
| JP | 2006-182948 | A | 13 July 2006 | (Family: none) | |
| JP | 2002-231051 | A | 16 August 2002 | (Family: none) | |
| JP | 2001-207068 | A | 31 July 2001 | (Family: none) | |
| US | 6384128 | B1 | 07 May 2002 | (Family: none) | |
| JP | 7401029 | B1 | 19 December 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI10138379 A
- JP 2006181776 A
- JP 2018162337 A
- JP HEI10138244 A
- JP 2002129027 A
- JP 453368 B
- JP 52012240 B
- JP 61007332 A